# EUROPÄISCHE PATENTSCHRIFT

(11) **EP 2 678 654 B1**
(45) Veröffentlichungstag und Bekanntmachung des Hinweises auf die Patenterteilung: **28.10.2015**
(21) Anmeldenummer: 12706029.1
(22) Anmeldetag: 22.02.2012
(51) Int. Cl.: G01M 15/09, G01M 15/14

(54) **VERFAHREN FÜR DIE FUNKTIONSPRÜFUNG VON TURBOMASCHINEN, SOWIE PRÜFEINRICHTUNG DAFÜR**
METHOD FOR FUNCTIONALLY TESTING TURBOMACHINES, AND TEST DEVICE THEREFOR
PROCÉDÉ PERMETTANT L'ESSAI DE FONCTIONNEMENT DE TURBOMACHINES, ET DISPOSITIF D'ESSAI ASSOCIÉ

(30) Priorität: 24.02.2011 AT 2512011
(43) Veröffentlichungstag der Anmeldung: 01.01.2014
(73) Patentinhaber: AVL List GmbH, 8020 Graz (AT)
(72) Erfinder: BERGER, Hartmut, 28777 Bremen (DE)
(74) Vertreter: Patentanwälte Pinter & Weiss OG
(86) Internationale Anmeldenummer: PCT/EP2012/053013
(87) Internationale Veröffentlichungsnummer: WO 2012/113831

(56) Entgegenhaltungen:
- EP-A1- 1 426 578
- EP-A2- 2 056 089
- DE-B3-102008 031 274

## Beschreibung

Die Erfindung betrifft ein Verfahren für die Funktionsprüfung von Turbomaschinen, vorzugsweise Abgasturboladern, wobei der Prüfling mit unter Druck stehendem Gas beaufschlagt und dadurch betrieben wird, sowie eine Prüfeinrichtung für Turbomaschinen, vorzugsweise Abgasturbolader, mit einer Aufnahme für den Prüfling, einer Quelle für unter Druck stehendes Gas, vorzugsweise für Druckluft, mit welcher der Prüfling verbunden werden kann, sowie einer Auswerteeinrichtung.

Die systematische Integration von Qualitätssicherungsprüfständen (Funktionsprüfständen) in den Produktionsprozess von Motoren, Getrieben und anderen Aggregaten in der Automobilindustrie ist bereits seit vielen Jahren üblich. Aus den Anforderungen von Verbrauchern und der Gesetzgebung resultiert die Forderung nach immer effizienteren Motoren, wofür u.a. die Aufladung mittels mechanischer oder turbo-getriebener Lader angewendet wird. Daher wurde auch für diese Komponenten nach entsprechenden Prüfverfahren gesucht.

Turbomaschinen sind prinzipiell relativ einfach aufgebaute rotierende Maschinen mit-verglichen z.B. mit einem Verbrennungsmotor - wenigen rotierenden Teilen. Stark vereinfacht kann man davon ausgehen, dass die Maschine "in Ordnung" ist, wenn sie sich frei drehen lässt. In der Praxis tauchen aber doch viele Detailprobleme auf, wie z.B. die Fehlerstatistiken der Automobilhersteller für die eingesetzten Turbolader oder die teilweise sehr hohen Reparaturanteile in den Betriebsprüfständen der Triebwerkhersteller belegen. Bedingt durch das Funktionsprinzip dieser Strömungsmaschinen ist man bisher davon ausgegangen, dass eine sinnvolle Prüfung der Maschinen nur in der Nähe der normalen Betriebspunkte möglich ist, was große Gasmassenströme erfordert, die dazu auch noch entweder erhitzt werden müssen (bei Gasturbinen) oder durch die Maschine erhitzt werden (bei Turbokompressoren). Das Ergebnis dieser Anforderungen ist dann regelmäßig ein "klassischer" Heißprüfstand, in dem die Maschinen im Betriebsbereich überprüft werden. Die großen Nachteile dieser Prüfung am Ende des Produktionsprozesses sind eine späte Fehlererkennung, erhöhte Reparaturkosten durch zusätzliche Ab- und Aufrüstvorgänge, erhöhte Betriebskosten durch mehrfache Prüfung im Fehlerfall, das Risiko eines größeren Maschinenschadens durch von Fehlern ausgelöste Folgeschäden, die Verletzungsgefahr durch heiße Bauteile und die Wartezeiten zur Abkühlung des Prüflings, bevor mit der Fehlerdiagnose und -behebung begonnen werden kann.

Um diese Probleme zu vermeiden, hat man in der Vergangenheit versucht, eine Prüfung von Turbomaschinen mit komprimiertem Gas (Druckluft) durchzuführen. Dabei wird versucht, im normalen Betrieb vorkommende Betriebspunkte so weit wie möglich mit einem stationären Gasmassenstrom zu simulieren. Aufgrund des hohen Energieaufwands, der zur Erzeugung der benötigten großen Gasmassenströme erforderlich ist, hat sich diese Art der Prüfung bisher aber nicht breitflächig durchgesetzt.

Bei Flugzeugtriebwerken findet meist eine Endprüfung der fertig hergestellten Turbomaschine unter Betriebsbedingungen bei Volllast statt, während bei Grossserienprodukten wie etwa Turboladern für Automobilmotoren vielfach eine ungeprüfte Auslieferung der Turbomaschine an den Kunden stattfindet, da eine vollständige Prüfung aller Teile unter Betriebsbedingungen nicht wirtschaftlich wäre. In der EP 1 426 578 B1 ist eine kalte Funktionsprüfung von Turboladern im eingebauten Zustand am Verbrennungsmotor beschrieben, die aber ebenso wie die Prüfung unter Betriebsbedingungen den Nachteil der späten Erkennung von Fehlern aufweist. Diese späte Fehlererkennung führt im besten Fall zu erhöhten Reparaturkosten (zusätzliche Ab- und Aufrüstvorgänge im Prüfstand, zusätzliche Arbeitsschritte in der Reparatur durch Demontage/Montage zusätzlicher Teile, erneute Prüfung nach der Reparatur) und im schlechtesten Fall zu einem größeren Schaden der Turbomaschine durch vom Fehler ausgelöste Folgeschäden. Daher bestand weiterhin die Anforderung nach einem kostengünstigen und in allen Belangen sicheren Prüfverfahren, da eine 100% Heißprüfung aller Turbolader aus wirtschaftlichen Überlegungen nicht realisierbar erscheint.

In der WO 2008/005679 A2 sind ein Verfahren und eine Vorrichtung beschrieben, mit welchen durch Prüfung an einem oder mehreren einzelnen Betriebspunkten (single test condition) die Leistungsdaten eines Turboladers überprüft werden sollen. Diese Überprüfung soll einen direkten Vergleich von Betriebspunkten des normalen Betriebs mit jenen aus dem Prüfstand bieten und damit in der Prüfstation vergleichbare Messergebnisse zu solchen aus normalem Betrieb erzielen lassen. Es sind jedoch keinerlei Vorkehrungen vorgesehen, mögliche Fehlerursachen durch eine gezielte Abstimmung der Prüfparameter und den Betrieb am Rand oder außerhalb des normalen Betriebsbereichs erkennbar zu machen.

Die DE 102008031274 B3 offenbart ein Verfahren und eine Vorrichtung zur Ermittlung von Kennfeldern eines Turboladers. Bei dem beschriebenen Verfahren wird einem konstanten Heißgasmassenstrom eine einstellbare Pulsation überlagert, um so das Verhalten eines Verbrennungsmotors mit einem oder mehreren Zylindern zu simulieren und damit realitätsnähere Kennfelder bestimmen zu können. Hintergrund des Verfahrens ist der Betrieb des Turboladers mit der sogenannten "Stoßaufladung", bei der die Energie des Abgasimpulses beim Öffnen eines Abgasventils ausgenutzt wird. Das Prinzip der hier beschriebenen Prüfung dient jedoch nicht der Fehlerdiagnose oder Funktionsprüfung, sondern der Ermittlung möglichst realitätsnaher Kennfelder auf einem Heißgasprüfstand.

Es war daher die Aufgabe der vorliegenden Erfindung, ein Verfahren und eine Prüfeinrichtung für Turbomaschinen anzugeben, das eine einfache, wirtschaftliche und dennoch aussagekräftige Prüfung dieser Komponenten gestattet.

Zur Lösung dieser Aufgabe ist das Verfahren erfindungsgemäß dadurch gekennzeichnet, dass der Prüfling in eine Prüfeinrichtung eingebunden und mittels dieser Prüfeinrichtung lediglich impulsartig mit einem Gas, vorzugsweise mit Druckluft, beaufschlagt wird, wobei aus dem, durch den zumindest einen Gasdruckimpuls resultierenden, dynamischen Verhalten des Prüflings allfällige Fehler ermittelt werden. Damit kann auf eine Heißprüfung wie auch auf die Prüfung stationärer Betriebspunkte mittels komprimiertem Gas verzichtet werden. Statt dessen wird als Basis die drehende Prüfung mit einem Gasdruckimpuls in Verbindung mit einer dynamischen Messwerterfassung und -auswertung durchgeführt, was eine frühzeitige und kostengünstige Fehlererkennung ermöglicht. Der Ausdruck "Druckimpuls" ist entsprechend der üblichen Definition als kurzzeitiger Druckanstieg und -abfall oder umgekehrt definiert, im Gegensatz zu bekannten Prüfverfahren, die mit im Wesentlichen konstanten Gasströmen arbeiten. Vorzugweise wird der Prüfling mit zumindest zwei Gasdruckimpulsen, gegebenenfalls mit unterschiedlichem Energieinhalt, beaufschlagt.

Gemäß einer vorteilhaften Ausführungsvariante kann der Energieinhalt zumindest eines Gasdruckimpulses durch eine zusätzliche Beheizung oder Befeuerung erhöht werden.

Eine andere Ausführungsvariante des Verfahrens ist dadurch gekennzeichnet, dass der Prüfling in normaler Betriebsrichtung betrieben wird, in dem ein Gaseintritt oder gegebenenfalls alle Gaseintritte in den Prüfling mit dem Gasdruckimpuls beaufschlagt werden.

Eine andere Variante zur rotierenden Prüfung ist dadurch gekennzeichnet, dass der Prüfling durch Beaufschlagung des oder jedes Gasaustrittes des Prüflings mit zumindest einem Gasdruckimpuls in zur normalen Betriebsrichtung umgekehrter Strömungsrichtung betrieben wird.

Vorteilhafterweise kann zur genaueren Abstimmung auf den jeweiligen Prüfling oder die konkrete Prüfaufgabe der Gasdruckimpuls am oder in der Nähe des Prüflings vorzugsweise variabel gedrosselt werden.

In ähnlicher Weise kann eine Abstimmung der Prüfung dadurch erfolgen, dass eine durch Betätigung des Prüflings mittels des Gasdruckimpulses bewirkte und von diesem separate Gasströmung aus dem Prüfling am oder in der Nähe des Prüflings vorzugsweise variabel gedrosselt wird.

Eine weitere Ausführungsform der Erfindung sieht vor, dass zusätzlich zur rotierenden Prüfung, vorzugsweise vor deren Durchführung, weitere Prüfungen erfolgen, beispielsweise eine Vollständigkeits- und/oder Maßkontrolle, eine mechanische, akustische, optische und/oder visuelle Kontrolle, eine Dichtheitsprüfung des Prüflings auf interne und/oder externe Undichtheit, eine Durchflussprüfung des Schmiersystems mit einem Prüfgas, vorzugsweise mit Luft, oder eine Überprüfung der zum Prüfling gehörenden Sensoren und Aktoren erfolgt, wobei vorzugsweise die zum Prüfling gehörenden Aktoren mit zusätzlichen Kräften beaufschlagt werden und/oder die zum Prüfling gehörenden Sensoren mit externen Signalen beaufschlagt werden.

Vorteilhafterweise wird vor dem Prüflauf eine automatisierte Identifizierung zumindest des Produkttyps des Prüflings durch das Mess- und/oder Steuerungssystem der Prüfeinrichtung vorgenommen und der Prüflauf dann abhängig vom Ergebnis der Identifizierung durchgeführt, erfolgt die Identifizierung des Produkttyps vorzugsweise durch die Erfassung physikalischer Eigenschaften des Prüflings wie beispielsweise Größe, Gewicht oder Form, bzw. die Identifizierung des Produkttyps oder des Prüflings an sich durch die Abfrage bzw. Erkennung einer individuellen Kennzeichnung, oder wird die Identifizierung des Produkttyps oder des Prüflings an sich durch elektronischer Informationen aus dem Prozessleitsystem abgeleitet.

Eine weitere Ausführungsform der Erfindung sieht vor, dass mittels Verbindung zumindest einiger Sensoren und Aktoren des Prüflings sowie zumindest einiger Sensoren und Aktoren des Prüfstands an zumindest ein Mess- und/oder Steuerungssysteme ein zumindest teilautomatischer Ablauf der Prüfung erfolgt, wobei ein gegebenenfalls variables Prüfprogramm durchlaufen wird und wobei vorzugsweise zumindest einige der Messwerte teil- oder vollautomatisch aufgenommen, gespeichert und für eine manuelle und/oder automatische Auswertung zur Verfügung gestellt werden.

Vorteilhafterweise kann vorgesehen sein, dass der Prüflauf variabel in Abhängigkeit von dem Ergebnis einer oder mehrerer vorhergehenden Prüfungen und/oder abhängig von Umgebungsbedingungen durchgeführt wird.

Eine weitere vorteilhafte Variante ist dadurch gekennzeichnet, dass eine automatische Auswertung der Prüfergebnisse im Hinblick auf Abweichungen von vorgebbaren festen Werten oder in Abhängigkeit von dem Ergebnis einer oder mehrerer vorhergehender Prüfungen und/oder Umgebungsbedingungen variablen Werten vorgenommen, der Prüfling entsprechend klassifiziert und vorzugsweise die Prüfergebnissen abgespeichert und/oder angezeigt werden, wobei vorzugsweise einzelne oder alle verwendeten Prüfparameter und Mess- und Auswerteergebnisse in Verbindung mit einer eindeutigen Identifikationskennzeichnung des Prüflings lokal in der Prüfeinrichtung und/oder einem übergeordneten System gespeichert werden.

Vorzugsweise werden eine automatische Auswertung der Prüfergebnisse im Hinblick auf mögliche Ursachen von Abweichungen vom Normalzustand vorgenommen, entsprechende Hinweise zur Beseitigung der Abweichungen ausgegeben und mit den Prüfergebnissen abgespeichert und/oder angezeigt.

Dabei kann vorgesehen sein, dass zumindest ein Messwert dynamisch zeitbasiert, dynamisch drehzahlbasiert oder dynamisch drehwinkelbasiert erfasst wird.

Eine weitere alternative Ausführungsvariante der Erfindung ist dadurch gekennzeichnet, dass der Prüfling bei abgeschalteter externer Schmiermittelversorgung betrieben wird.

Alternativ kann eine Schmierung des Prüflings mit einem an die Prüfung angepassten Schmiermittel erfolgen, welches mit konstanten technischen Eigenschaften zugeführt bzw. entsprechend den Prüfanforderungen konditioniert wird. Die im im Normalbetrieb vorhandene Ölviskosität bei der typischen Betriebstemperatur kann durch die Verwendung dünnflüssigerer oder dickflüssigerer Öle bei für die Prüfung frei wählbaren Temperaturen entweder nachgebildet oder gezielt so verändert werden, dass Fehler im Schmiersystem und/oder in der Lagerung besser diagnostiziert werden können. Die erforderlichen Eigenschaften des Schmiermittels ergeben sich aus den Prüfbedingungen, insbesondere im Wesentlichen aus den während des Prüflaufs erreichten Drehzahlen und den produktspezifischen Anforderungen. Mittels geeigneter Konditionierung kann eine gewünschte Temperatur des Schmiermittels eingeregelt werden, die in Verbindung mit dem speziellen gewählten Schmiermittel für die gewünschte Viskosität sorgt.

Dabei ist vorzugsweise vorgesehen, dass das dem Prüfling zugeführte Schmiermittel überwacht wird, beispielsweise dessen Volumen- und/oder Massenstrom oder die Temperatur des aus dem Prüfling austretenden Schmiermittels erfasst und ausgewertet werden.

Eine besonders vorteilhafte Ausführungsform der Erfindung ist dadurch gekennzeichnet, dass die Drehzahlerfassung und/oder Drehwinkelerfassung des Prüflings mittels eines berührungslosen Verfahrens erfolgt, beispielsweise optisch, magnetisch, akustisch, elektromagnetisch oder radioelektrisch, und vorzugsweise so hochauflösend, dass über den gesamten Drehzahlbereich der Prüfaufgabe die einzelnen Turbinen- und/oder Kompressorblätter erkannt werden können.

Vorzugsweise werden dabei Volumen- und/oder Massenstrom und/oder Temperatur und/oder Druck des Gasdruckimpulses am Eintritt und/oder des Gases am Austritt des Prüflings vorzugsweise dynamisch vermessen.

Es können auch Körper- und/oder Luftschallemissionen an einer oder mehreren Stellen am Prüfling und/oder im Prüfstand statisch und/oder dynamisch, gegebenenfalls auch berührungslos, erfasst werden.

Auch eine vorzugsweise dynamische Vermessung von Volumen- und/oder Massenstrom und/oder Temperatur und/oder Druck des Gases am Eintritt und/oder am Austritt einer mechanisch mit dem Prüfling gekoppelten zweiten Maschine, beispielsweise einem Kompressor, ist möglich.

Für die Prüfeinrichtung wie eingangs beschrieben wird die gestellte Aufgabe erfindungsgemäß dadurch gelöst, dass die Quelle zur Beaufschlagung des oder jedes Gaseintritts in den Prüfling, gegebenenfalls alternativ oder zusätzlich auch des oder jedes Gasaustritts, mit zumindest einem Gasdruckimpuls ausgelegt ist, und dass in der Auswerteeinrichtung das aus dem Druckluftimpuls resultierende dynamische Verhalten des Prüflings überwacht und daraus Fehler ermittelt werden.

Eine vorteilhafte Ausführungsform der Vorrichtung ist dadurch gekennzeichnet, dass die Quelle zur Beaufschlagung des Prüflings mit zumindest zwei Gasdruckimpulsen, gegebenenfalls mit unterschiedlichem Energieinhalt, ausgelegt ist.

Vorzugsweise ist eine zusätzliche Einrichtung zur Beheizung oder Befeuerung des unter Druck stehenden Gases vorgesehen.

Weiters kann vorteilhafterweise eine vorzugsweise einstellbare Drosseleinrichtung für das unter Druck stehende Gas am oder in der Nähe des oder jedes Gaseintritts in den Prüfling und/oder am oder in der Nähe des oder jedes allfälligen Gasaustritts aus dem Prüfling vorgesehen sein.

Vorteilhafterweise können weitere Prüfeinrichtungen vorgesehen sein, beispielsweise für eine Vollständigkeits- und/oder Maßkontrolle, eine mechanische, akustische, optische und/oder visuelle Kontrolle, eine Dichtheitsprüfung des Prüflings auf interne und/oder externe Undichtheit, eine Durchflussprüfung des Schmiersystems mit einem Prüfgas, vorzugsweise mit Luft, oder eine Überprüfung der zum Prüfling gehörenden Sensoren und Aktoren, vorzugsweise durch Beaufschlagung mit externen Kräften und/oder Signalen.

Eine erfindungsgemäße Prüfeinrichtung kann auch dadurch gekennzeichnet sein, dass Einrichtungen zur automatisierten Identifizierung zumindest des Produkttyps des Prüflings in das Mess- und/oder Steuerungssystem der Prüfeinrichtung integriert sind, und dass vorzugsweise im Steuerungssystem der Prüfeinrichtung ein Ablauf implementiert ist, bei welchem der Prüflauf abhängig vom Ergebnis der Identifizierung durchgeführt wird.

Dabei sind vorzugsweise Einrichtungen zur Identifizierung des Produkttyps vorzugsweise durch die Erfassung physikalischer Eigenschaften des Prüflings wie beispielsweise Größe, Gewicht oder Form, oder durch die Abfrage bzw. Erkennung einer individuellen Kennzeichnung, oder durch elektronische Informationen aus dem Prozessleitsystem vorgesehen.

Vorteilhafterweise kann die Prüfeinrichtung auch die Merkmale aufweisen, dass zumindest einige Sensoren und Aktoren des Prüflings sowie zumindest einige Sensoren und Aktoren des Prüfstands mit zumindest einem Mess- und/oder Steuerungssystem verbunden sind, in welchem ein zumindest teilautomatischer Ablauf der Prüfung implementiert ist, bei welchem zumindest einige der Messwerte teil- oder vollautomatisch aufgenommen, gespeichert und für eine manuelle und/oder automatische Auswertung zur Verfügung gestellt werden.

Gemäß einer möglichen Ausführungsform der Prüfeinrichtung ist ein System zur Versorgung des Prüflings mit einem an die Prüfung angepassten Schmiermittel vorgesehen, gegebenenfalls umfassend ein Konditioniersystem für das Schmiermittel.

Eine derartige Ausführungsform ist vorteilhafterweise zusätzlich dadurch gekennzeichnet, dass Einrichtungen zur Überwachung des dem Prüfling zugeführten Schmiermittels, beispielsweise dessen Volumen- und/oder Massenstrom oder der Temperatur des aus dem Prüfling austretenden Schmiermittels, vorgesehen sind.

Eine weitere alternative Ausführungsform der Erfindung ist dadurch gekennzeichnet, dass Einrichtungen zur berührungslosen und vorzugsweise hochauflösenden Drehzahlerfassung und/oder Drehwinkelerfassung des Prüflings vorgesehen sind, beispielsweise mittels optischer, magnetischer, akustischer, elektromagnetischer oder radioelektrischer Aufnehmer.

Auch können Einrichtungen zur vorzugsweise dynamischen Ermittlung des Volumen- und/oder Massenstroms und/oder der Temperatur und/oder des Drucks des Gasdruckimpulses am Eintritt und/oder des Gases am Austritt des Prüflings und/oder gegebenenfalls berührungslose Einrichtungen zur Ermittlung der Körper- und/oder Luftschallemissionen an einer oder mehreren Stellen am Prüfling und/oder im Prüfstand vorgesehen sein.

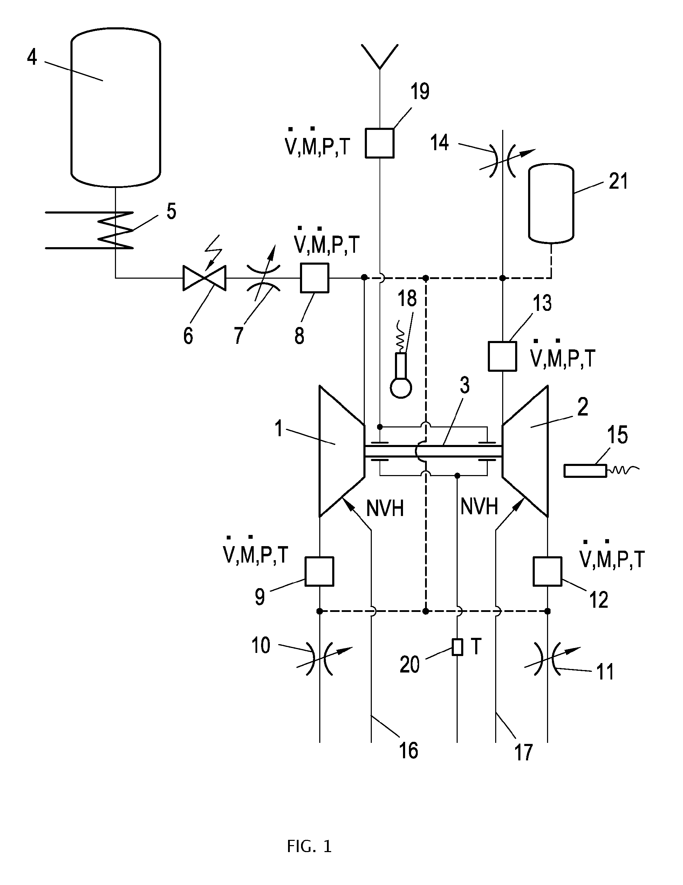

In der nachfolgenden Beschreibung soll die Erfindung unter Bezugnahme auf die beigefügte Zeichnung näher erläutert werden.

Die Zeichnungsfigur zeigt eine schematische Skizze einer erfindungsgemäßen Prüfvorrichtung für Turbomaschinen.

Die im Folgenden beschriebenen Verfahren und Vorrichtungen ermöglichen die zuverlässige, frühzeitige und kostengünstige Erkennung von Fehlern an Turbomaschinen, die in weiterer Folge alternativ auch als Prüfling bezeichnet werden. Unter den Begriff Turbomaschinen sind hier alle Arten von Turbinen, die die Energie eines gasförmigen oder flüssigen Energieträgers in mechanische Energie umwandeln, und alle Arten von rotierenden Kompressoren oder Pumpen, die mechanische Energie in eine Gas- oder Flüssigkeitsenergie umwandeln, subsummiert. Auch direkt oder über ein Getriebe mechanisch gekoppelte Kombinationen dieser Maschinen fallen unter den Begriff des Prüflings im Rahmen der vorliegenden Erfindung, ob dies nun beispielsweise Turbolader für Verbrennungsmotoren oder Turbotriebwerke für Flugzeuge sind. Die nachfolgend erläuterten Merkmale sind für alle Arten der genannten Prüflinge einzeln und in Kombination einsetzbar.

Nach den beschriebenen Verfahren geprüfte Turbomaschinen können anschließend unter Betriebsbedingungen (Leistungsnachweis) geprüft werden, ohne Funktionsausfälle befürchten zu müssen. Dadurch lassen sich die Prüfprozeduren verkürzen und eine Mehrfachbelegung mit fehlerhaften und anschließend reparierten Turbomaschinen wird vermieden, was zu einer deutlich verbesserten Wirtschaftlichkeit der oftmals mehrere Prüfstände umfassenden Prüfanlage führt. In der Grossserie können die nach den beschriebenen Verfahren geprüften Turbomaschinen überwiegend ohne einen abschließenden Test unter Betriebsbedingungen ausgeliefert werden. Für die zuverlässige Qualitätssicherung ist eine stichprobenweise Kontrolle der Leistungs- und/oder Emissionsdaten nach den anerkannten Regeln der statistischen Prozesskontrolle (SPC) ausreichend. Ausgehend von der bislang meist ungeprüften Auslieferung der Turbomaschinen wird mit den beschriebenen Verfahren eine wesentliche Qualitätsverbesserung und eine Rückverfolgbarkeit der produzierten Turbomaschinen erreicht. Im Vergleich zu einer Prüfung der Turbomaschinen 1 unter Betriebsbedingungen können erhebliche Einsparungen an Energie, Arbeitszeit und Invest erreicht werden.

Mit einer Turbine 1 ist beispielsweise ein Kompressor 2 über die mechanischen Verbindung 3 mechanisch gekoppelt, wobei hier diese gesamte Anordnung den Prüfling darstellt. Für den Antrieb des Prüflings 1, 2, 3 im Rahmen der erfindungsgemäßen Funktionsprüfung wird nun ein kurzzeitiger Gasdruckimpuls aus einer Gasdruckquelle 4 verwendet und das daraus resultierende dynamische Verhalten des Prüflings 1, 2, 3 für die Fehlererkennung genutzt. Dabei wird vorzugsweise Druckluft verwendet, bei Bedarf können aber auch andere Gase zur Anwendung kommen. Als Gasdruckquelle 4 dient üblicherweise ein an die erforderliche Prüfung angepasster Gasdruckbehälter in der Nähe der Prüfeinrichtung, die Teil eines Systems sein kann, das aus mehreren, vorzugsweise vernetzten Prüfeinrichtungen besteht. Typischerweise wird dabei der Prüfling 1, 2, 3 dafür ausschließlich mit klar abgegrenzten, kurzzeitigen Impulsen des jeweiligen Gases beaufschlagt, welche nicht einem ansonsten im Wesentlichen konstanten Gasstrom überlagert sind. Vorteilhafterweise wird mehr als nur ein einzelner Gasdruckimpuls für die Prüfung verwendet, wobei vorzugsweise zumindest zwei, gegebenenfalls mehrere Gasdruckimpulse mit unterschiedlichem Energieinhalt verwendet werden. Der Energieinhalt eines beliebigen, den Prüfling beaufschlagenden Gasdruckimpulses kann durch eine zusätzliche Beheizung oder Befeuerung mittels etwa einer Gasbeheizung 5 erhöht werden.

Der den Prüfling 1, 2, 3 antreibende Gasdruckimpuls kann über das Ventil 6 gesteuert und vorzugsweise über eine Drosselvorrichtung 7 am oder in der Nähe des Gaseintrittes des Prüflings 1, 2, 3 gedrosselt werden, wobei die Drosselvorrichtung 7 vorzugsweise einstellbar ausgeführt ist. Über eine Messeinrichtung 8 für den Massendurchfluss und/oder Volumenstrom und/oder Druck und/oder Temperatur am Gaseintritt des Prüflings 1, 2, 3 und eine Messeinrichtung 9 für den Massendurchfluss und/oder Volumenstrom und/oder Druck und/oder Temperatur am Gasaustritt des Prüflings 1, 2, 3 werden entsprechende Messwerte ermittelt und der Auswertevorrichtung des Prüfstandes übermittelt.

Wie oben für den Gaseintritt beschrieben, kann auch der Gasaustritt am oder in der Nähe des Austritts aus dem Prüfling 1, 2, 3 statisch oder variabel gedrosselt werden, wofür die vorzugsweise einstellbare Drosselvorrichtung 10 vorgesehen ist.

Eine Beeinflussung der drehenden Bewegung des Prüflings mit Aufschluss über dessen Zustand ist aber auch über die mechanisch gekoppelte Maschine 2 möglich. Um diese Beeinflussung genau steuern zu können, wird gemäß einem Ausführungsbeispiel der Erfindung der Gaseintritt in diese meist als Kompressor ausgeführte Maschine 2 statisch oder variabel gedrosselt. Dafür ist eine vorzugsweise einstellbare Drosselvorrichtung 11 am Gaseintritt der über beispielsweise eine Welle oder ein Getriebe als mechanische Verbindung 3 gekoppelten Maschine 2 vorgesehen. Auch hier können vorteilhafterweise zumindest eine Messeinrichtung 12 für den Massendurchfluss und/oder Volumenstrom und/oder Druck und/oder Temperatur am Gaseintritt der gekoppelten Maschine 2 sowie auch zumindest eine Messeinrichtung 13 für den Massendurchfluss und/oder Volumenstrom und/oder Druck und/oder Temperatur am Gasaustritt der gekoppelten Maschine 2 vorgesehen sein. Besonders feine Abstimmung ist möglich, wenn über eine Drosselvorrichtung 14, vorzugsweise einstellbar, am Gasaustritt der gekoppelten Maschine 2 der Gasaustritt dieser Maschine 2 vorzugsweise variabel gedrosselt wird.

Überhaupt kann mittelbar über die mechanisch gekoppelte Maschine 2 auf den Prüfling 1, 2, 3 eingewirkt werden, was auch über zusätzlich antreibend und/oder bremsend auf die Maschine 2 einwirkende Gasdruckimpulse bewerkstelligt werden kann. Dafür kann an, oder in der Nähe von, einem oder mehreren Gasein- und/oder -austritten der mechanisch gekoppelten zweiten Maschine 2 ein an die Prüfung angepasster starrer oder flexibler Gasspeicher 21 angeschlossen sein. Allenfalls kann die Gasdruckquelle 4 zusätzlich auch als Gasdruckquelle für die Maschine 2 herangezogen werden.

Die Gasdruckquelle 4 kann aber nicht nur den Gaseintritt des Prüflings 1, 2, 3 beaufschlagen, sondern auch dessen Gasaustritt, so dass der Prüfling 1, 2, 3 allenfalls auch in der umgekehrten Strömungsrichtung betrieben werden kann.

Wie bereits weiter oben erwähnt, können eine oder mehrere der beschriebenen Prüfeinrichtungen in den Produktionsprozess der Turbomaschinen integriert sein. Anstelle einer natürlich auch möglichen manuellen Be- bzw. Entladung bzw. Adaption bzw. Deadaption der Prüfeinrichtung ist vorteilhafterweise vorgesehen, dass die Prüflinge 1, 2, 3 der Prüfeinrichtung mittels eines Fördersystems teil- oder vollautomatisch zugeführt und/oder von dieser abgeführt werden. Auch die Montage bzw. Demontage und/oder Adaption bzw. Deadaption der Prüflinge 1, 2, 3 im Prüfstand wird vorzugsweise teil- und/oder vollautomatisch vorgenommen. Dabei werden vorteilhafterweise alle Abläufe zur Be- und Entladung sowie zur Montage/Demontage und Adaption/Deadaption von einem Steuerungssystem überwacht und/oder teil- oder vollautomatisch gesteuert.

Über das Steuerungssystem des Prüfstands oder der gesamten Anlage wird vorteilhafterweise der genaue Produkttyp des Prüflings 1, 2, 3 vor und/oder während der Anlieferung ermittelt und der weiteren Prozess der Montage/Demontage, Adaption/Deadaption und natürlich auch die Prüfung entsprechend anpasst. Die Typermittlung kann dabei sowohl durch Erfassung physikalischer Eigenschaften des Prüflings 1, 2, 3 selbst (z.B. Größe, Gewicht, Form oder spezielle Kennzeichnung) als auch durch die Abfrage und/oder Bereitstellung mechanischer oder elektronischer Informationen (z.B. mechanische Kodierung, Datenträger oder übergeordneter Rechner) oder einer Kombination dieser Möglichkeiten erfolgen.

Vor der rotierenden Prüfung wird zweckmäßigerweise eine Vollständigkeits- und/oder Maßkontrolle mit geeigneten Prüfverfahren (z.B. mechanisch, akustisch, optisch und/oder visuell (Kamerasystem)) durchgeführt, ebenso wie vorteilhafterweise eine Dichtigkeitsprüfung einer oder mehrerer Kammern der Maschine auf interne und/oder externe Undichtigkeiten. Weitere zusätzliche Verfahrensschritte können sein, dass vor und/oder während der rotierenden Prüfung die zum Prüfling gehörenden Sensoren und Aktoren geprüft und/oder betätigt werden, dass vor und/oder während der rotierenden Prüfung die zum Prüfling 1, 2, 3 gehörenden Aktoren mit zusätzlichen Kräften beaufschlagt werden und/oder dass vor und/oder während der rotierenden Prüfung die zum Prüfling gehörenden Sensoren mit externen Signalen beaufschlagt werden.

Für die eigentliche Prüfung der Turbomaschine ist vorteilhafterweise vorgesehen, dass einzelne oder alle Sensoren und Aktoren des Prüflings 1, 2, 3 sowie alle Sensoren und Aktoren des Prüfstands an eines oder mehrere Mess- und/oder Steuerungssysteme angeschlossen sind, welche den teil- oder vollautomatischen Ablauf der Prüfung überwachen und steuern. Dabei kann das jeweils aktive Mess- und/oder Steuerungssystem eine teil- oder vollautomatische Prüfung des Prüflings nach einem fest vorgegebenen und/oder variablen Prüfprogramm (z.B. in Abhängigkeit von vorhergehenden Prüfergebnissen aus anderen Prüfständen und/oder vorhergehenden Prüfungen im gleichen Prüfstand und/oder Umgebungsbedingungen) ausführen. Die dabei resultierenden Messwerte werden von dem einen oder den mehreren Mess- und/oder Steuerungssystemen teil- oder vollautomatisch aufgenommen, gegebenenfalls gespeichert und/oder für eine manuelle und/oder automatische Auswertung zur Verfügung gestellt. Einige oder alle Messwerte können sowohl statisch als auch dynamisch zeitbasiert erfasst werden, alternativ oder zusätzlich auch sowohl statisch als auch dynamisch drehzahlbasiert und/oder drehwinkelbasiert erfasst werden.

Besonders vorteilhaft ist eine berührungslose Drehzahlerfassung des Prüflings 1, 2, 3 über den berührungslosen Drehzahlaufnehmer 15, beispielsweise optisch, magnetisch, akustisch, elektromagnetisch (Wirbelstrom), oder radioelektrisch (Radar). Vorzugsweise erfolgt dabei die Drehzahlerfassung so hochauflösend, dass über den gesamten Drehzahlbereich der Prüfaufgabe die einzelnen Turbinen- und/oder Kompressorblätter erkannt werden können.

Auch der Volumen- und/oder Massenstrom und/oder Temperatur und/oder Druck des Gasdruckimpulses werden statisch und/oder dynamisch vermessen, sei es am Austritt der Turbomaschine 1 des Prüflings 1, 2, 3 und/oder am Eintritt und/oder Austritt der mechanisch gekoppelten zweiten Maschine 2 (z.B. Kompressor). Als weitere Prüfungsverfahren können auch über Körperschallaufnehmer 16, 17 am Prüfling 1, 2, 3 und der gekoppelten Maschine 2 sowie über gegebenenfalls Luftschallaufnehmer 18 Körper- und/oder Luftschallemissionen an einer oder mehreren Stellen am Prüfling 1, 2, 3 und/oder im Prüfstand statisch und/oder dynamisch erfasst werden. Die Körperschallerfassung kann dabei mit bauteilberührenden oder im Prüfstand fest verbauten Schwingungsaufnehmern und/oder mit berührungslosen Schwingungsaufnehmern (z.B. Laser oder Ultraschall) erfolgen.

Während der Prüfling 1, 2, 3 im Rahmen der erfindungsgemäßen Prüfung gegebenenfalls auch ohne Schmiermittel betrieben werden kann, ist vorzugsweise eine Schmierung mit einem an die Prüfung angepassten Schmiermittel vorgesehen, welches mit konstanten technischen Eigenschaften zugeführt wird. Das Schmiermittel kann beispielsweise eine andere Viskosität aufweisen als jenes für den Normalbetrieb des Prüflings, und kann insbesondere entsprechend den Prüfanforderungen erwärmt und/oder gekühlt werden. Auch die Eigenschaften und Zustände des Schmiermittels nach Austritt aus dem Prüfling können zusätzlichen Aufschluss über den Prüfling 1, 2, 3 geben, so dass auch zumindest eine Messeinrichtung 19 für den Massendurchfluss und/oder Volumenstrom und/oder Druck und/oder Temperatur am Schmiermitteleintritt sowie auch eine Messeinrichtung 20 für die Temperatur am Schmiermittelaustritt vorgesehen sein können.

Vor der rotierenden Prüfung des Prüflings 1, 2, 3 ist dabei eine Durchflussprüfung des Schmiersystems mit Luft oder einem Prüfgas vorteilhaft. Im Rahmen der Prüfung ist dann vorteilhafterweise vorgesehen, dass der Volumen-und/oder Massenstrom der Schmiermittelversorgung statisch und/oder dynamisch erfasst und ausgewertet wird, ebenso wie die Temperatur des austretenden Schmiermittels statisch und/oder dynamisch erfasst und ausgewertet werden kann.

Die während der Prüfung des Prüflings 1, 2, 3 von einem oder mehreren Mess- und/oder Steuerungssystemen automatisch aufgenommenen und gespeicherten Messwerte können vorteilhafterweise gleich von diesem oder diesen Systemen oder aber einem weiteren unabhängigen System automatisch auf Abweichungen von fest definierten und/oder variablen Grenzwerten überprüft werden. Je nach dem Ergebnis dieser Überprüfung kann der Prüfling 1, 2, 3 automatisch klassifiziert und auch gekennzeichnet werden, beispielsweise per Markierung am Bauteil selbst, per Ausdruck oder elektronisch auf einem Datenträger oder in einem dezentralen oder zentralen Rechner. Zweckmäßigerweise wird die Klassifizierung mit den Prüfergebnissen abgespeichert und/oder angezeigt. Eine weitere Möglichkeit ist die automatische Auswertung der Prüfergebnisse im Hinblick auf mögliche Ursachen von Abweichungen vom Normalzustand, wobei zusätzlich gleich entsprechende Hinweise zur Beseitigung der Abweichungen ausgegeben und mit den Prüfergebnissen abspeichert und/oder anzeigt werden können. Das oder mehrere Mess- und/oder Steuerungssysteme können einzelne oder alle erfassten Messwerte und ermittelten Prüfergebnisse nach einer lokalen Zwischenspeicherung automatisch an einen übergeordneten Rechner weiterleiten, wo sie für weitere Auswertungen unabhängig vom Produktionsbetrieb am Prüfstand gesichert, ausgewertet und archiviert werden können. Umgekehrt kann jedes der Mess- und/oder Steuerungssysteme die aktuellsten Prüfparameter automatisch von einem übergeordneten zentralen Rechner beziehen und lokal zwischenspeichern, beispielsweise um einen Produktionsstopp bei einem Netzwerkausfall zu vermeiden. Dabei ist es natürlich auch zweckmäßig, wenn einzelne oder alle verwendeten Prüfparameter und Mess- und Auswerteergebnisse in Verbindung mit einer eindeutigen Identifikationskennzeichnung des geprüften Bauteils im lokalen Mess- und/oder Steuerungssystem und/oder auf dem übergeordneten Rechner gespeichert werden.

Zur Sicherung der Rückverfolgbarkeit aller Teile werden diese üblicherweise mit einer eindeutigen Identifikationskennzeichnung versehen und alle im Produktionsprozess anfallenden Daten dieser Identifikationskennzeichnung zugeordnet. Gegebenenfalls kann die Identifikationskennzeichnung zum Beginn des Prozesses auch virtuell vergeben und auf geeigneten Speichermedien (z.B. Datenträger des Werkstückträgers oder übergeordneter Rechner) zwischengespeichert werden, bevor die endgültige Kennzeichnung im Laufe oder am Ende des Produktionsprozesses physisch am Bauteil angebracht wird (z.B. Kennzeichnung erst nach abschließender IO Prüfung).

Die oben dargelegten Merkmale des Verfahrens der Prüfung sowie des Prüfsystems sind auch im übergeordneten Kontext der Qualitätssicherung in der Fertigung der Turbomaschinen zu sehen. Bereits heute werden in praktisch allen Produktionsprozessen in der Serienfertigung einzelne Qualitätsprüfungen integriert. In den meisten Anwendungsfällen werden in diesen Prüfungen spezifische Fehlermerkmale überprüft - verbunden mit dem Nachteil, dass per Definition mit einem geringeren Risiko verbundene Fehler nicht gesucht und somit auch nicht erkannt werden. Das nachfolgend beschriebene Verfahren zur Qualitätssicherung von Turbomaschinen in der Serienproduktion verringert das Risiko der mangelhaften Erkennung von Fehlern im Produktionsprozess und führt zu einer erheblichen Kostenersparnis gegenüber einer (heute in der Regel nicht eingesetzten) vollständigen Prüfung aller Einzelteile auf spezifische Fehlermerkmale.

Anstelle von einzelnen Prüfungen auf spezifische Fehlermerkmale an einzelnen Teilen werden Prüfungen von Funktionseinheiten durchgeführt, bei denen eine große Anzahl von möglichen (und möglicherweise unerwarteten) Fehlern zu einem vom "Normalzustand" abweichenden Prüfergebnis führen. Ausgangspunkt für die Definition der im Rahmen dieses Verfahrens benötigten Prüfeinrichtungen ist die Erstellung einer in der Entwicklung- und Produktionsplanung allgemein bekannten "Prozess-FMEA" (Fehler-Möglichkeits-Einfluss-Analyse). In dieser werden die als kritisch zu bewertenden Fehler herausgefiltert und Gegenmaßnahmen zur Risikominderung definiert. Aus wirtschaftlichen Gründen ist es jedoch in der Praxis fast nie möglich, alle Fehler (also auch die mit einem niedrigen prognostizierten Risiko) mit Hilfe von Gegenmaßnahmen am Ort oder in der Nähe ihrer Entstehung zu verhindern.

Hier setzt jetzt das neue Verfahren für die Qualitätssicherung im Produktionsprozess an. In einem ersten Schritt wird zunächst versucht, mögliche Fehler mit hohem Risiko am Ort oder in der Nähe der Entstehung zu verhindern (z.B. durch konstruktive Maßnahmen oder Prozessverbesserungen). In einem zweiten Schritt wird die (verbesserte) FMEA-Analyse dahingehend überprüft, mit welchen Prüfmethoden und an welchen Stellen im Produktionsprozess jeder einzelne Fehler erkennbar gemacht werden kann. Im dritten Schritt wird überprüft, welche Prüfmethoden an welchen Stellen im Produktionsprozess die größte Bandbreite an Fehlern detektieren können und welche unterschiedlichen Prüfmethoden an einer Stelle des Produktionsprozesses zusammengefasst werden können.

Ziel ist dabei die Definition von möglichst wenigen Prüfeinrichtungen, die an "strategisch" wichtigen Stellen des Produktionsprozesses angeordnet werden und praktisch als "Sicherheitsnetz" wirken. In Summe sollen die definierten Prüfeinrichtungen in der Lage sein, eine maximale Anzahl unterschiedlicher Fehler zu erkennen - im Idealfall auch solche, die "eigentlich" nicht vorkommen dürften.

Im letzten Schritt erfolgt eine Wirtschaftlichkeitsbetrachtung des entwickelten Qualitätssicherungskonzepts. Darin müssen neben den Investitionskosten für die Prüfeinrichtung(en) (die für eine einzelne komplexe Prüfeinrichtung höher sein können als für mehrere einfache Prüfeinrichtungen) auch die Kosten für die Infrastruktur (z.B. Gebäude), die Ver- und Entsorgungseinrichtungen, die Energiekosten, die Betriebskosten und vor allem auch die Wartungskosten einfließen (die bei wenigen zentralen Prüfeinrichtungen in der Regel deutlich geringer sind als bei vielen dezentralen Prüfeinrichtungen). Ein wichtiger Faktor in der Wirtschaftlichkeitsbetrachtung sind aber auch die Kosten für die Reparatur (oder Vernichtung) des geprüften Produkts in dem Fall, in dem in der Prüfstation ein Fehler erkannt wird. Je höher diese Kosten im Verlauf des Produktionsprozesses werden, desto eher führt die Wirtschaftlichkeitsbetrachtung dazu, die Prüfprozesse auf mehrere Einrichtungen im Produktionsprozess zu verteilen.

Für die spezielle Anwendung dieser Grundsätze im Produktionsprozess von Turbomaschinen stehen aus der Serienproduktion von Motoren und Getrieben in der Automobilindustrie bekannten Einzelverfahren zur Verfügung, umfassend die Prüfung aller Einzelteile während und nach Abschluss des Fertigungsprozesses auf Einhaltung der geforderten physikalischen Eigenschaften, die Vermeidung von Auswahl- und Montagefehlern durch Poka-Yoke-Methoden, die Überwachung von Fertigungs- und Montageprozessen (z.B. Werkzeug-Überwachung in Fertigungsmaschinen, Kraft/Weg-Überwachung von Fügevorgängen, Drehmoment/Drehwinkelüberwachung von Schraubvorgängen, Auftragskontrolle von Flüssigdichtungen), die Überprüfung von teilweise oder vollständig montierten Baugruppen auf Vollständigkeit, Dichtigkeit, Reibkräfte, Kontaktierung und Funktion, die Überprüfung des vollständig oder überwiegend vollständig montierten Endprodukts auf Vollständigkeit, Dichtigkeit, Reibkräfte, Kontaktierung und Funktion ohne es dafür unter normalen Betriebsbedingungen zu betreiben (wie weiter oben ausführlich beschrieben ist), sowie die Überprüfung des vollständig oder überwiegend vollständig montierten Endprodukts auf Vollständigkeit, Dichtigkeit, Reibkräfte, Kontaktierung, Funktion, Leistung und Emission unter normalen Betriebsbedingungen - entweder als 100%-Prüfung zur Leistungs- und Emissionseinstellung und -Überprüfung oder als Qualitätskontrolle im Rahmen einer statistischen Prozesskontrolle (SPC) - auf einem speziellen Leistungsprüfstand oder eingebaut im Endprodukt.

Gemäß den Ergebnissen der Wirtschaftlichkeitsbetrachtung werden die notwendigen, sinnvollen und wirtschaftlich vertretbaren Prüfverfahren aus den zuvor aufgeführten Verfahren ausgewählt. Das Ziel ist dabei, eine möglichst große Anzahl von möglichen Fehlern mit möglichst wenigen Prüfungen zu erkennen. Besondere Bedeutung kommt dabei der Überprüfung der teilweise bis vollständig montierten Baugruppen und Endprodukte auf Vollständigkeit, Dichtigkeit, Reibkräfte, Kontaktierung und Funktion zu. Abschließend erfolgt eine nahtlose Integration in den vorgesehenen Produktionsprozess.

Dabei ist es besonders vorteilhaft, wenn die Überprüfung des vollständig oder überwiegend vollständig montierten Endprodukts auf Vollständigkeit, Dichtigkeit, Reibkräfte, Kontaktierung, Funktion, Leistung und Emission unter normalen Betriebsbedingungen zur Leistungseinstellungs- und/oder Emissionseinstellung und/oder -Überprüfung (100% Prüfung) durchgeführt wird oder nur als Qualitätskontrolle im Rahmen einer statistischen Prozesskontrolle (SPC) an einem Teil der produzierten Gesamtmenge durchgeführt wird.

## Patentansprüche

1. Verfahren für die Funktionsprüfung von Turbomaschinen, vorzugsweise Abgasturboladern, wobei der Prüfling mit unter Druck stehendem Gas beaufschlagt und dadurch betrieben wird, **dadurch gekennzeichnet, dass** der Prüfling in eine Prüfeinrichtung eingebunden und mittels dieser Prüfeinrichtung mit einem Gas, vorzugsweise mit Druckluft, mit einem Gasdruckimpuls, der keinem im Wesentlichen konstanten Gasstrom überlagert ist, beaufschlagt wird, wobei aus dem, durch den zumindest einen Gasdruckimpuls resultierenden, dynamischen Verhalten des Prüflings allfällige Fehler ermittelt werden.

2. Verfahren nach Anspruch 1, **dadurch gekennzeichnet, dass** der Prüfling mit zumindest zwei Gasdruckimpulsen, gegebenenfalls mit unterschiedlichem Energieinhalt, beaufschlagt wird.

3. Verfahren nach Anspruch 1 oder 2, **dadurch gekennzeichnet, dass** der Energieinhalt zumindest eines Gasdruckimpulses durch eine zusätzliche Beheizung oder Befeuerung erhöht wird.

4. Verfahren nach Anspruch 1, **dadurch gekennzeichnet, dass** der Prüfling in normaler Betriebsrichtung betrieben wird, in dem ein Gaseintritt oder gegebenenfalls alle Gaseintritte in den Prüfling mit dem Gasdruckimpuls beaufschlagt werden.

5. Verfahren nach Anspruch 1, **dadurch gekennzeichnet, dass** der Prüfling durch Beaufschlagung des oder jedes Gasaustrittes des Prüflings mit zumindest einem Gasdruckimpuls in zur normalen Betriebsrichtung umgekehrter Strömungsrichtung betrieben wird.

6. Verfahren nach Anspruch 4 oder 5, **dadurch gekennzeichnet, dass** der Gasdruckimpuls am oder in der Nähe des Prüflings vorzugsweise variabel gedrosselt wird.

7. Verfahren nach Anspruch 4 oder 5, **dadurch gekennzeichnet, dass** eine durch Betätigung des Prüflings mittels des Gasdruckimpulses bewirkte und von diesem separate
Gasströmung aus dem Prüfling am oder in der Nähe des Prüflings vorzugsweise variabel gedrosselt wird.

8. Verfahren nach Anspruch 1, **dadurch gekennzeichnet, dass** zusätzlich zur rotierenden Prüfung, vorzugsweise vor deren Durchführung, weitere Prüfungen erfolgen, beispielsweise eine Vollständigkeits- und/oder Maßkontrolle, eine mechanische, akustische, optische und/oder visuelle Kontrolle, eine Dichtheitsprüfung des Prüflings auf interne und/oder externe Undichtheit, eine Durchflussprüfung des Schmiersystems mit einem Prüfgas, vorzugsweise mit Luft, oder eine Überprüfung der zum Prüfling gehörenden Sensoren und Aktoren erfolgt, wobei vorzugsweise die zum Prüfling gehörenden Aktoren mit zusätzlichen Kräften beaufschlagt werden und/oder die zum Prüfling gehörenden Sensoren mit externen Signalen beaufschlagt werden.

9. Verfahren nach Anspruch 1, **dadurch gekennzeichnet, dass** vor dem Prüflauf eine automatisierte Identifizierung zumindest des Produkttyps des Prüflings durch das Mess- und/oder Steuerungssystem der Prüfeinrichtung vorgenommen und der Prüflauf dann abhängig vom Ergebnis der Identifizierung durchgeführt wird, die Identifizierung des Produkttyps vorzugsweise durch die Erfassung physikalischer Eigenschaften des Prüflings wie beispielsweise Größe, Gewicht oder Form erfolgt, bzw. dass die Identifizierung des Produkttyps oder des Prüflings an sich durch die Abfrage bzw. Erkennung einer individuellen Kennzeichnung erfolgt, oder dass die Identifizierung des Produkttyps oder des Prüflings an sich durch elektronischer Informationen aus dem Prozessleitsystem abgeleitet wird.

10. Verfahren nach Anspruch 1, **dadurch gekennzeichnet, dass** mittels Verbindung zumindest einiger Sensoren und Aktoren des Prüflings sowie zumindest einiger Sensoren und Aktoren des Prüfstands mit zumindest einem Mess- und/oder Steuerungssystem ein zumindest teilautomatischer Ablauf der Prüfung erfolgt, wobei ein gegebenenfalls variables Prüfprogramm durchlaufen wird und wobei vorzugsweise zumindest einige der Messwerte teil- oder vollautomatisch aufgenommen, gespeichert und für eine manuelle und/oder automatische Auswertung zur Verfügung gestellt werden.

11. Verfahren nach Anspruch 1, **dadurch gekennzeichnet, dass** der Prüflauf variabel in Abhängigkeit von dem Ergebnis einer oder mehrerer vorhergehenden Prüfungen und/oder abhängig von Umgebungsbedingungen durchgeführt wird.

12. Verfahren nach Anspruch 1, **dadurch gekennzeichnet, dass** eine automatische Auswertung der Prüfergebnisse im Hinblick auf Abweichungen von vorgebbaren festen Werten oder in Abhängigkeit von dem Ergebnis einer oder mehrerer vorhergehender Prüfungen und/oder Umgebungsbedingungen variablen Werten vorgenommen, der Prüfling entsprechend klassifiziert und vorzugsweise die Prüfergebnissen abgespeichert und/oder angezeigt werden, wobei vorzugsweise einzelne oder alle verwendeten Prüfparameter und Mess- und Auswerteergebnisse in Verbindung mit einer eindeutigen Identifikationskennzeichnung des Prüflings lokal in der Prüfeinrichtung und/oder einem übergeordneten System gespeichert werden.

13. Verfahren nach Anspruch 1, **dadurch gekennzeichnet, dass** eine automatische Auswertung der Prüfergebnisse im Hinblick auf mögliche Ursachen von Abweichungen vom Normalzustand vorgenommen, entsprechende Hinweise zur Beseitigung der Abweichungen ausgegeben und mit den Prüfergebnissen abgespeichert und/oder angezeigt werden.

14. Verfahren nach Anspruch 1, **dadurch gekennzeichnet, dass** zumindest ein Messwert dynamisch zeitbasiert, dynamisch drehzahlbasiert oder dynamisch drehwinkelbasiert erfasst wird.

15. Verfahren nach Anspruch 1, **dadurch gekennzeichnet, dass** der Prüfling bei abgeschalteter externer Schmiermittelversorgung betrieben wird.

16. Verfahren nach Anspruch 1, **dadurch gekennzeichnet, dass** eine Schmierung des Prüflings mit einem an die Prüfung angepassten Schmiermittel erfolgt, welches mit konstanten technischen Eigenschaften zugeführt bzw. entsprechend den Prüfanforderungen konditioniert wird.

17. Verfahren nach Anspruch 1, **dadurch gekennzeichnet, dass** das dem Prüfling zugeführte Schmiermittel überwacht wird, beispielsweise dessen Volumen- und/oder Massenstrom oder die Temperatur des aus dem Prüfling austretenden Schmiermittels erfasst und ausgewertet werden.

18. Verfahren nach Anspruch 1, **dadurch gekennzeichnet, dass** die Drehzahlerfassung und/oder die Drehwinkelerfassung des Prüflings mittels eines berührungslosen Verfahrens erfolgt, beispielsweise optisch, magnetisch, akustisch, elektromagnetisch oder radioelektrisch, und vorzugsweise so hochauflösend, dass über den gesamten Drehzahlbereich der Prüfaufgabe die einzelnen Turbinen- und/oder Kompressorblätter erkannt werden.

19. Verfahren nach Anspruch 1, **dadurch gekennzeichnet, dass** Volumen- und/oder Massenstrom und/oder Temperatur und/oder Druck des Gasdruckimpulses am Eintritt und/oder des Gases am Austritt des Prüflings vorzugsweise dynamisch vermessen werden.

20. Verfahren nach Anspruch 1, **dadurch gekennzeichnet, dass** Körper- und/oder Luftschallemissionen an einer oder mehreren Stellen am Prüfling und/oder im Prüfstand statisch und/oder dynamisch, gegebenenfalls auch berührungslos, erfasst werden.

21. Verfahren nach Anspruch 1, **dadurch gekennzeichnet, dass** Volumen- und/oder Massenstrom und/oder Temperatur und/oder Druck des Gases am Eintritt und/oder am Austritt einer mechanisch mit dem Prüfling gekoppelten zweiten Maschine, beispielsweise einem Kompressor, vorzugsweise dynamisch vermessen werden.

22. Prüfeinrichtung für Turbomaschinen, vorzugsweise Abgasturbolader, mit einer Aufnahme für den Prüfling, einer Quelle für unter Druck stehendes Gas, vorzugsweise für Druckluft, mit welcher der Prüfling verbunden ist, sowie einer Auswerteeinrichtung, **dadurch gekennzeichnet, dass** die Quelle (4) zur Beaufschlagung des oder jedes Gaseintritts in den Prüfling (1, 2, 3), gegebenenfalls alternativ oder zusätzlich auch des oder jedes Gasaustritts, mit zumindest einem Gasdruckimpuls, der keinem im Wesentlichen konstanten Gasstrom überlagert ist, ausgelegt ist, und dass in der Auswerteeinrichtung das aus dem Gasdruckimpuls resultierende dynamische Verhalten des Prüflings (1, 2, 3) überwacht wird und daraus Fehler zu ermitteln sind.

23. Prüfeinrichtung nach Anspruch 22, **dadurch gekennzeichnet, dass** die Quelle (4) zur Beaufschlagung des Prüflings (1, 2, 3) mit zumindest zwei Gasdruckimpulsen, gegebenenfalls mit unterschiedlichem Energieinhalt, ausgelegt ist.

24. Prüfeinrichtung nach Anspruch 22 oder 23, **dadurch gekennzeichnet, dass** eine zusätzliche Einrichtung (5) zur Beheizung oder Befeuerung des unter Druck stehenden Gases vorgesehen ist.

25. Prüfeinrichtung nach Anspruch 22, **dadurch gekennzeichnet, dass** eine vorzugsweise einstellbare Drosseleinrichtung (7, 10, 11, 14) für das unter Druck stehende Gas am oder in der Nähe des oder jedes Gaseintritts in den Prüfling (1, 2, 3) und/oder am oder in der Nähe des oder jedes allfälligen Gasaustritts aus dem Prüfling (1, 2, 3) vorgesehen ist.

26. Prüfeinrichtung nach Anspruch 22, **dadurch gekennzeichnet, dass** zumindest einige Sensoren und Aktoren des Prüflings (1, 2, 3) sowie zumindest einige Sensoren und Aktoren des Prüfstands mit zumindest einem Mess- und/oder Steuerungssystem verbunden sind, in welchem ein zumindest teilautomatischer Ablauf der Prüfung implementiert ist, bei welchem zumindest einige der Messwerte teil- oder vollautomatisch aufgenommen, gespeichert und für eine manuelle und/oder automatische Auswertung zur Verfügung gestellt werden.

27. Prüfeinrichtung nach Anspruch 22, **dadurch gekennzeichnet, dass** ein System zur Versorgung des Prüflings (1, 2, 3) mit einem an die Prüfung angepassten Schmiermittel vorgesehen ist, gegebenenfalls umfassend ein Konditioniersystem für das Schmiermittel.

28. Prüfeinrichtung nach Anspruch 22, **dadurch gekennzeichnet, dass** Einrichtungen (19, 20) zur Überwachung des dem Prüfling (1, 2, 3) zugeführten Schmiermittels, beispielsweise dessen Volumen- und/oder Massenstrom oder der Temperatur des aus dem Prüfling (1, 2, 3) austretenden Schmiermittels, vorgesehen sind.

29. Prüfeinrichtung nach Anspruch 22, **dadurch gekennzeichnet, dass** Einrichtungen (15) zur berührungslosen und vorzugsweise hochauflösenden Drehzahlerfassung und/oder Drehwinkelerfassung des Prüflings (1, 2, 3) vorgesehen sind, beispielsweise mittels optischer, magnetischer, akustischer elektromagnetischer oder radioelektrischer Aufnehmer.

30. Prüfeinrichtung nach Anspruch 22, **dadurch gekennzeichnet, dass** Einrichtungen (8, 9, 12, 13) zur vorzugsweise dynamischen Ermittlung des Volumen- und/oder Massenstroms und/oder der Temperatur und/oder des Drucks des Gasdruckimpulses am Eintritt und/oder des Gases am Austritt des Prüflings (1, 2, 3) und/oder gegebenenfalls berührungslose Einrichtungen (16, 17, 18) zur Ermittlung der Körper- und/oder Luftschallemissionen an einer oder mehreren Stellen am Prüfling (1, 2, 3) und/oder im Prüfstand vorgesehen sind.

## Claims

1. A method for the functional testing of turbo-machines, preferably exhaust gas turbochargers, wherein the test object is subjected to pressurized gas and is operated thereby, **characterized in that** the test object is integrated in a testing device and is subjected by means of this testing device to a gas, preferably compressed air, with a gas pressure pulse, that is not superimposed onto an substantially constant gas flow, wherein from the dynamic behavior of the test object resulting from the at least one gas pressure pulse, potential errors are determined.

2. The method according to claim 1, **characterized in that** the test object is subjected to at least two gas pressure pulses, optionally with different energy content.

3. The method according to claim 1 or 2, **characterized in that** the energy content of at least one gas pressure pulse is increased by additional heating or fire-heating.

4. The method according to claim 1, **characterized in that** the test object is operated in the normal operating direction **in that** a gas intake or optionally all gas intakes into the test object are subjected to the gas pressure pulse.

5. The method according to claim 1, **characterized in that** by subjecting the gas discharge or each gas discharge of the test object to at least one gas pressure pulse, the test object is operated in the flow direction opposite to the normal operating direction.

6. The method according to claim 4 or 5, **characterized in that** the gas pressure pulse is throttled at or near the test object, preferably in a variable manner.

7. The method according to claim 4 or 5, **characterized in that** a gas flow from the test object, which gas flow is caused by actuating the test object by means of the gas pressure pulse and is separate from the latter, is throttled at or near the test object, preferably in a variable manner.

8. The method according to claim 1, **characterized in that** in addition to the rotating testing, preferably before carrying out said testing, further testings take place, for example a completeness and/or dimension check, a mechanical, acoustic, optical and/or visual check, a leak test of the test object for internal and/or external leaks, a flow test of the lubrication system with a test gas, preferably with air, or a testing of the sensors and actuators belonging to the test object, wherein preferably the actuators belonging to the test object are subjected to additional forces and/or the sensors belonging to the test object are subjected to external signals.

9. The method according to claim 1, **characterized in that** prior to the test run, an automated identification at least of the product type of the test object is carried out by the measuring and/or control system of the testing device and subsequently, the test run is performed depending on the result of the identification, the identification of the product type is preferably performed by detecting physical properties of the test object such as, for example, size, weight or shape, or that the identification of the product type or the test object itself is performed by scanning or identifying an individual marking, or that the identification of the product type or the test object itself is derived by electronic information from the process control system.

10. The method according to claim 1, **characterized in that** by means of a connection of at least some sensors and actuators of the test object and at least some sensors and actuators of the test stand to at least one measuring and/or control system, an at least partially automated process flow of the testing takes place, wherein an optionally variable testing program is passed through, and wherein preferably at least some of the measured values are partially or fully automatically collected, stored and are made available for a manual and/or automatic evaluation.

11. The method according to claim 1, **characterized in that** the test run is performed variably depending on the result of one or a plurality of previous tests and/or depending on the ambient conditions.

12. The method according to claim 1, **characterized in that** an automatic evaluation of the test results is carried out with regard to deviations from specifiable fixed values or, depending on the result of one or a plurality of previous tests and/or ambient conditions, from variable values, that the test object is classified accordingly and the test results are preferably stored and/or displayed, wherein preferably individual or all test parameters used and measurement and evaluation results are locally stored in connection with a unique identification marking of the test object in the testing device and/or in a superordinated system.

13. The method according to claim 1, **characterized in that** an automatic evaluation of the test results with regard to possible causes of deviations from the normal state is carried out and corresponding information for eliminating the deviations is output and stored and/or displayed together with the test results.

14. The method according to claim 1, **characterized in that** at least one measured value is recorded in a dynamic time-based, dynamic speed-based or dynamic rotation angle-based manner.

15. The method according to claim 1, **characterized in that** the test object is operated with the external lubricant supply being turned off.

16. The method according to claim 1, **characterized in that** lubricating the test object is carried out with a lubricant which is adapted to the testing and is fed with constant technical properties or is conditioned according to the test requirements.

17. The method according to claim 1, **characterized in that** the lubricant fed to the test object is monitored, for example, the lubricant's volume flow and/or mass flow or the temperature of the lubricant discharging from the test object is detected and evaluated.

18. The method according to claim 1, **characterized in that** detecting the rotational speed and/or detecting the rotation angle of the test object takes place by means of a non-contact method, for example optically, magnetically, acoustically, electromagnetically, or radioelectrically, and preferably with a resolution high enough that the individual turbine and/or compressor blades can be identified over the entire speed range of the testing task.

19. The method according to claim 1, **characterized in that** volume flow and/or mass flow and/or temperature and/or pressure of the gas pressure pulse at the gas inlet and/or gas outlet of the test object are preferably measured dynamically.

20. The method according to claim 1, **characterized in that** structure-borne noise and air-borne noise emissions at one or a plurality of positions on the test object and/or in the test stand are detected statically and/or dynamically, and optionally also in a non-contact manner.

21. The method according to claim 1, **characterized in that** volume flow and/or mass flow and/or temperature and/or pressure of the gas at the inlet and/or outlet of a second machine, for example a compressor, that is coupled with the test object, is preferably measured dynamically.

22. A testing device for turbo-machines, preferably exhaust gas turbochargers, comprising a receptacle for the test object, a source for pressurized gas, preferably for compressed air, to which the test object is connected, and an evaluation unit, **characterized in that** the source (4) for acting on the gas intake or on each gas intake into the test object (1, 2, 3), where applicable alternatively or additionally also on the gas discharge or on each gas discharge, is designed for at least one gas pressure pulse, that is not superimposed onto a substantially constant gas flow, and that in the evaluation unit, the dynamic behavior of the test object (1, 2, 3) resulting from the gas pressure pulse is monitored and errors are to be determined therefrom.

23. The testing device according to claim 22, **characterized in that** the source (4) for acting on the test object (1, 2, 3) is designed for at least two gas pressure pulses, optionally with different energy content.

24. The testing device according to claim 22 or 23, **characterized in that** an additional device (5) for heating or fire-heating the pressurized gas is provided.

25. The testing device according to claim 22, **characterized in that** a preferably adjustable throttle device (7, 10, 11, 14) is provided for the pressurized gas at or near the gas intake or each gas intake into the test object (1, 2, 3), and/or at or near the possible gas discharge or each gas discharge from the test object (1, 2, 3).

26. The testing device according to claim 22, **characterized in that** at least some sensors and actuators of the test object (1, 2, 3) and at least some sensors and actuators of the test stand are connected to at least one measuring and/or control system in which an at least partially automated process flow of the testing is implemented, wherein at least some of the measured values are partially or fully automatically collected, stored and are made available for a manual and/or automatic evaluation.

27. The testing device according to claim 22, **characterized in that** a system is provided for supplying the test object (1, 2, 3) with a lubricant adapted to the testing, optionally comprising a conditioning system for the lubricant.

28. The testing device according to claim 22, **characterized in that** devices (19, 20) are provided for monitoring the lubricant fed to the test object (1, 2, 3), for example the lubricant's volume flow and/or mass flow or the temperature of the lubricant discharging from the test object (1, 2, 3).

29. The testing device according to claim 22, **characterized in that** devices (15) are provided for non-contact and preferably high-resolution detection of rotational speed and/or rotation angle of the test object (1, 2, 3), for example by means of optical, magnetic, acoustic, electromagnetic or radioelectric sensors.

30. The testing device according to claim 22, **characterized in that** devices (8, 9, 12, 13) for preferably dynamically determining the volume flow and/or mass flow and/or the temperature and/or the pressure of the gas pressure pulse at the gas inlet and/or the gas outlet of the test object (1, 2, 3), and/or optionally non-contact devices (16, 17, 18) for determining structure-borne noise and/or air-borne noise emissions at one or a plurality of locations on the test object (1, 2, 3) and/or in the test stand are provided.

## Revendications

1. Procédé de test de fonctionnement de turbomachines, de préférence de turbocompresseurs à gaz d'échappement, l'objet à tester étant soumis à un gaz sous pression et est ainsi exploité, **caractérisé en ce que** l'objet à tester est introduit dans un dispositif de test et est soumis au moyen de ce dispositif de test à un gaz, de préférence de l'air comprimé, avec une impulsion de pression de gaz qui n'est superposé à aucun flux de gaz sensiblement constant, d'éventuelles défauts étant détectés à partir du comportement dynamique de l'échantillon qui résulte d'au moins une impulsion de pression de gaz.

2. Procédé selon la revendication 1, **caractérisé en ce que** l'objet à tester est soumis à au moins deux impulsions de pression de gaz, ayant éventuellement des contenus énergétiques différents.

3. Procédé selon la revendication 1 ou 2, **caractérisé en ce que** le contenu énergétique d'au moins une impulsion de pression de gaz est augmentée par chauffage ou mise à feu supplémentaire.

4. Procédé selon la revendication 1, **caractérisé en ce que** l'objet à tester est utilisé dans un sens de fonctionnement normal dans lequel une entrée de gaz ou éventuellement toutes les entrées de gaz dans l'objet à tester sont soumises à l'impulsion de pression de gaz.

5. Procédé selon la revendication 1, **caractérisé en ce que** l'on exploite l'objet à tester en soumettant la sortie de gaz ou chaque sortie de gaz à au moins une impulsion de pression de gaz dans un sens d'écoulement inverse du sens de fonctionnement normal.

6. Procédé selon la revendication 4 ou 5, **caractérisé en ce que** l'impulsion de pression de gaz est de préférence étranglée de manière variable au niveau ou à proximité de l'objet à tester.

7. Procédé selon la revendication 4 ou la revendication 5, **caractérisé en ce qu'**un écoulement de gaz, provenant de l'objet à tester, qui est causé par l'actionnement de l'objet à tester au moyen de l'impulsion de pression de gaz et qui en est séparé, est étranglé de préférence de manière variable au niveau ou au voisinage de l'objet à tester.

8. Procédé selon la revendication 1, **caractérisé en ce qu'**en plus du test de rotation, de préférence avant sa mise en oeuvre, des tests supplémentaires sont effectués, par exemple, un contrôle d'état complet et/ou un contrôle de dimensions, un contrôle mécanique, acoustique, optique et/ou visuel, un test d'étanchéité de l'échantillon pour rechercher une fuite interne et/ou externe, un test d'écoulement du système de lubrification avec un gaz de test, de préférence avec de l'air, ou une vérification des capteurs et des actionneurs appartenant à l'échantillon, les actionneurs appartenant à l'échantillon étant de préférence soumis à des forces supplémentaires, et/ou pour les capteurs appartenant à l'échantillon étant de préférence soumis à des signaux externes.

9. Procédé selon la revendication 1, **caractérisé en ce que**, avant 1 déroulement du test, une identification automatique au moins du type de produit de l'objet à tester est effectué par le système de mesure et/ou de commande du dispositif de test et le déroulement du test est ensuite effectué en fonction du résultat de l'identification, **en ce que** l'identification du type de produit est effectuée de préférence par détection des propriétés physiques de l'objet à tester, comme la taille, le poids ou la forme ou **en ce que** l'identification du type de produit ou de l'objet à tester lui-même est effectuée par interrogation ou reconnaissance d'une identification individuelle, ou **en ce que** l'identification du type de produit ou de l'objet à tester lui-même est déduite par des informations électroniques provenant du système de commande de processus.

10. Procédé selon la revendication I, **caractérisé en ce qu'**en reliant au moins une partie des capteurs et des actionneurs de l'objet à tester ainsi qu'au moins une partie des capteurs et des actionneurs du banc d'essai à au moins une système de mesure et/ou de commande on réaliser un déroulement au moins partiellement automatique du test, un programme de test éventuellement variable étant exécuté et au moins une partie des valeurs mesurées étant de préférence enregistrées, mémorisée et mises à disposition de façon partiellement ou entièrement automatique en vue d'une évaluation manuelle et/ou automatique.

11. Procédé selon la revendication 1, **caractérisé en ce que** le déroulement du test est effectué de façon variable en fonction du résultat d'un ou de plusieurs tests précédents et/ou en fonction de conditions ambiantes.

12. Procédé selon la revendication 1, **caractérisé en ce que** l'on effectue une évaluation automatique des résultats de test en termes d'écarts par rapport à des valeurs fixes prédéterminées ou en fonction de valeurs variables qui sont le résultat d'un ou de plusieurs tests précédents et/ou de conditions ambiantes faites, **en ce que** l'on classe l'objet à tester de façon correspondante, et on mémorise et/ou on afficher de préférence les résultats du test, de préférence les paramètres de test utilisés et les résultats de mesure et d'évaluation, individuellement ou ensemble, étant de préférence mémorisés en liaison avec une caractéristique d'identification unique de l'objet à tester localement dans le dispositif de test et/ou dans un système de niveau supérieur.

13. Procédé selon la revendication 1, **caractérisé en ce que** l'on effectue une évaluation automatique des résultats de test concernant les causes possibles des écarts par rapport à l'état normal, on fournit des indications appropriées pour éliminer les écarts et on les mémorise et/ou on les affiche avec les résultats de test.

14. Procédé selon la revendication 1, **caractérisé en ce que** l'on détecte une valeur de mesure en se fondant dynamiquement sur le temps, en se fondant dynamiquement sur la vitesse de rotation, ou en se fondant dynamiquement sur l'angle de rotation.

15. Procédé selon la revendication 1, **caractérisé en ce que** l'objet à tester est exploité lorsque l'alimentation externe en lubrifiant est désactivée.

16. Procédé selon la revendication 1, **caractérisé en ce que** la lubrification de l'objet à tester est effectuée avec un lubrifiant adapté au test qui est fourni avec des propriétés techniques constants ou qui est conditionné en fonction des exigences du test.

17. Procédé selon la revendication 1, **caractérisé en ce que** l'on surveille le lubrifiant amené à l'objet à tester, par exemple son débit en masse et/ou en volume ou on détecte et ou évalue la température du lubrifiant sortant de l'objet à tester.

18. Procédé selon la revendication 1, **caractérisé en ce que** la détection de la vitesse de rotation et/ou la détection de l'angle de rotation de l'objet à tester est effectuée au moyen d'un procédé sans contact, par exemple de façon optique, magnétique, acoustique, électromagnétique ou radioélectrique, et de préférence à haute résolution de façon à détecter dans la gamme des vitesses de rotation du test les pales de turbine et/ou de compresseur.

19. Procédé selon la revendication 1, **caractérisé en ce que** le débit en volume et/ou en masse et/ou la température et/ou la pression de l'impulsion de pression de gaz à l'entrée et/ou di gaz à la sortie de l'objet à tester sont de préférence mesurées de manière dynamique.

20. Procédé selon la revendication 1, **caractérisé en ce que** les émissions sonores de la structure et/ou de l'air sont détectées en un ou plusieurs endroits au niveau de l'objet à tester et/ou dans le banc de test de façon statique et/ou dynamique, le cas échéant également sans contact.

21. Procédé selon la revendication 1, **caractérisé en ce que** le débit en volume et/ou en masse et/ou la température et/ou la pression du gaz à l'entrée et/ou à la sortie d'une seconde machine accouplée mécaniquement à l'objet à tester, par exemple un compresseur, sont mesurés de préférence dynamiquement.

22. Dispositif de test pour turbomachines, de préférence turbocompresseurs à gaz d'échappement, comprenant un logement destiné l'objet à tester, une source de gaz sous pression, de préférence de l'air comprimé auquel est relié l'objet à tester, ainsi qu'un dispositif d'évaluation, **caractérisé en ce que** la source (4) est conçue pour soumettre l'entrée ou chaque entrée de gaz dans l'objet à tester (1, 2.3), le cas échéant en variante ou en complément également la sortie ou chaque sortie de gaz, à au moins une impulsion de pression de gaz qui n'est superposée à aucun flux de gaz sensiblement constant, et **en ce que** l'on surveiller le comportement dynamique de l'objet à tester (1, 2, 3), résultant de l'impulsion de pression de gaz, dans le dispositif d'évaluation et l'on détermine à partir de là des défauts.

23. Dispositif de test selon la revendication 22, **caractérisé en ce que** la source (4) est conçue pour soumettre l'objet à tester (1, 2, 3) à au moins deux impulsions de pression de gaz, et le cas échéant avec un contenu énergétique différent.

24. Dispositif d'essai selon la revendication 22 ou la revendication 23, **caractérisé en ce qu'**un dispositif supplémentaire (5) est prévu pour chauffage ou mettre à feu le gaz sous pression.

25. Dispositif test selon la revendication 22, **caractérisé en ce qu'**un dispositif (7, 10, 11, 14) d'étranglement, de préférence réglable, du gaz sous pression au niveau ou au voisinage de l'entrée ou de chaque entrée de gaz dans l'objet à tester (1, 2, 3) et/ou au niveau ou au voisinage de la sortie ou de chaque sortie de gaz éventuelle de l'objet à tester (1, 2, 3).

26. Dispositif de test selon la revendication 22, **caractérisé en ce qu'**au moins une partie des capteurs et des actionneurs de l'objet à tester (1, 2, 3) et au moins une partie des capteurs et des actionneurs du banc de test sont reliés à au moins une système de mesure et/ou de commande dans lequel est mise en oeuvre un déroulement au moins partiellement automatique du test, lors duquel au moins une partie des valeurs mesurées sont enregistrées, mémorisées et mises à disposition de façon partiellement ou entièrement automatique en vue d'une évaluation manuelle et/ou automatique.

27. Dispositif de test selon la revendication 22, **caractérisé en ce qu'**il est prévu un système d'alimentation de l'objet de à tester (1, 2, 3) avec un lubrifiant adapté au test, comprenant éventuellement un système de conditionnement du lubrifiant.

28. Dispositif de test selon la revendication 22, **caractérisé en ce qu'**il est prévu des dispositifs (19, 20) servant à contrôler le lubrifiant amené à l'objet à tester (1, 2, 3), par exemple son débit en volume et/ou en masse ou la température du lubrifiant sortant de l'objet à tester (1, 2, 3) .

29. Dispositif de test selon la revendication 22, **caractérisé en ce qu'**il est prévu des dispositifs (15) de détection de vitesse de rotation et/ou de détection d'angle de rotation de l'objet à tester (1, 2, 3) sans contact et de préférence à haute résolution, par exemple au moyen de capteurs optiques, magnétiques, acoustiques, électromagnétiques ou radioélectriques.

30. Dispositif de test selon la revendication 22, **caractérisé en ce qu'**il est prévu des dispositifs (8, 9, 12, 13) de détermination de préférence dynamique du débit en volume et/ou en masse et/ou de la température et/ou la pression de l'impulsion de pression de gaz à l'entrée et/ou du gaz à la sortie de l'objet à tester (1, 2, 3) et/ou éventuellement des dispositifs sans contact (16, 17, 18) pour déterminer les émissions sonores de structure et/ou de l'air en un ou plusieurs endroits au niveau l'objet à tester (1, 2, 3) et/ou dans le banc de test.
